(19) Europäisches Patentamt / European Patent Office / Office européen des brevets

(11) **EP 3 775 963 B1**

(12) **FASCICULE DE BREVET EUROPÉEN**

(45) Date de publication et mention de la délivrance du brevet:
**25.12.2024 Bulletin 2024/52**

(21) Numéro de dépôt: **18712445.8**

(22) Date de dépôt: **12.02.2018**

(51) Classification Internationale des Brevets (IPC):
**G01S 5/00** *(2006.01)*    **G01S 5/02** *(2010.01)*
**G08B 21/02** *(2006.01)*

(52) Classification Coopérative des Brevets (CPC):
**G01S 5/0072; G01S 5/0284; G08B 21/0261**

(86) Numéro de dépôt international:
**PCT/FR2018/050333**

(87) Numéro de publication internationale:
**WO 2019/155131 (15.08.2019 Gazette 2019/33)**

(54) **PROCÉDÉS ET SYSTÈME DE GÉNÉRATION ET DE DÉTECTION D'AU MOINS UNE ZONE DE DANGER**

VERFAHREN UND SYSTEM ZUR ERZEUGUNG UND ERKENNUNG MINDESTENS EINES GEFAHRENBEREICHS

METHODS AND SYSTEM FOR GENERATING AND DETECTING AT LEAST ONE DANGER ZONE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**17.02.2021 Bulletin 2021/07**

(73) Titulaire: **CAD.42 SERVICES**
**75008 Paris (FR)**

(72) Inventeur: **PANAGET, Jean-Philippe**
**78600 Maisons-Laffitte (FR)**

(74) Mandataire: **Delaveau, Sophie**
**ETNA**
**3, rue Geoffroy Marie**
**75009 Paris (FR)**

(56) Documents cités:
**WO-A1-2015/144684**     **DE-A1- 102014 213 066**
**FR-A1- 3 022 386**     **US-A1- 2013 157 628**
**US-A1- 2013 180 469**     **US-B1- 9 884 585**

## Description

L'invention s'inscrit dans le domaine de la sécurité et de la détection d'obstacles, et plus précisément dans le domaine de la détection et de l'évitement d'obstacles fixes ou mobiles dans une zone déterminée.

L'invention vise plus particulièrement à protéger de manière dynamique des piétons ou des véhicules, qu'ils soient en mouvement ou non, d'au moins une zone spatiale à éviter.

Il est connu du document WO 201501094 un système d'alerte anticollision destiné à être porté par un utilisateur, ce système comprenant notamment un système de géolocalisation par satellite et des moyens de communication adaptés d'une part pour transmettre des coordonnées de position du porteur et d'autre part pour recevoir les coordonnées de position d'un véhicule représentant une zone de danger mobile. Le document WO2015144684A1 divulgue un système de protection de personnes sur un chantier utilisant un tag porté par une personne pour déterminer sa position vis à vie d'un zone potentiellement dangereuse,

Cependant, le système d'alerte décrit dans ce document est du type passif, car il ne permet pas de prévoir à l'avance la position du véhicule représentant cette zone de danger à éviter, par rapport à la position du piéton à protéger.

L'invention vise ainsi à proposer un procédé permettant de pallier les inconvénients cités ci-dessus, c'est-à-dire proposer un procédé permettant d'anticiper la position d'au moins une zone spatiale déterminée, notamment une zone de danger à éviter, relativement à la position de la personne ou de l'élément à protéger.

L'invention vise également à proposer un procédé de détection d'une telle zone spatiale. L'invention vise enfin à proposer un système adapté au moins pour mettre en oeuvre les procédés ci-dessus.

À cet effet, le procédé de génération d'au moins une zone spatiale fixe de danger à éviter dans un espace, à l'aide d'au moins un système de génération porté par un piéton et comprenant au moins des moyens de localisation et des moyens de gestion électroniques, comprend successivement au moins :

    i. une étape d'envoi par les moyens de gestion électroniques d'une commande déclenchant l'acquisition des coordonnés spatiales du système de génération aux moyens de localisation ;

    ii. une étape de détermination par les moyens de gestion électroniques d'un contour de forme et de dimensions déterminées délimitant la zone spatiale à partir des coordonnés spatiales du système de génération acquises par les moyens de localisation, et enregistrement des coordonnées spatiales définissant ledit contour dans un espace mémoire des moyens de gestion électroniques ;

    iii. une étape de détermination et d'enregistrement consistant en la détection de la zone spatiale fixe et/ou d'une zone spatiale mobile par le système de génération apte à détecter une telle zone spatiale, cette étape comprenant les sous-étapes successives de :

        a. détermination périodique des coordonnées de position du système par les moyens de localisation, des coordonnées spatiales de la zone mobile, et de la distance entre ladite position du système de génération et ladite zone spatiale mobile et/ou la zone spatiale fixe (13) par les moyens de gestion électroniques ;

        b. lorsque la distance déterminée à la sous-étape précédente est inférieure à une distance prédéterminée enregistrée dans l'espace mémoire des moyens de gestion, émission d'un signal d'alerte par un dispositif d'alerte du système de génération ;

    iv. une étape de détermination par les moyens de gestion électroniques des trajectoires possibles du système de génération et/ou de la zone spatiale mobile à partir de leurs coordonnées spatiales respectives, puis détermination d'une probabilité de collision entre le système de génération et la zone spatiale mobile et/ou la zone spatiale fixe.

Ainsi, avec le procédé de l'invention, en assurant la génération de coordonnées spatiales de zones de danger à éviter et en permettant l'enregistrement de ces coordonnées dans un système prévu à cet effet, la position de ces zones spatiales à éviter est connue à chaque instant. De fait, le système est toujours capable d'anticiper la position d'au moins une zone spatiale déterminée.

Le procédé de génération de l'invention peut également comporter les caractéristiques optionnelles suivantes considérées isolément ou selon toutes les combinaisons techniques possibles :

- Le procédé comprend une étape supplémentaire au cours de laquelle les coordonnées de la zone spatiale fixe sont envoyées à au moins un autre système de génération, via des moyens de communication intégrés à chaque système.

- L'étape i d'envoi de la commande d'acquisition est réalisée manuellement par actionnement d'un organe de déclenchement du type bouton poussoir solidaire du système de génération et relié électriquement aux moyens de gestion électroniques.

- Les dimensions de la zone spatiale fixe, et la position de la zone spatiale par rapport à la position du système de génération acquise à l'étape i, sont automatiquement attribuées à ladite zone spatiale fixe par les moyens de gestion électroniques au cours de l'étape ii, selon des grandeurs enregistrées dans l'espace mémoire desdits moyens de gestion électroniques.

- l'étape ii de détermination d'un contour de la zone spatiale fixe comprend les sous-étapes successives de :

    a. enregistrement périodique dans l'espace mémoire des moyens de gestion électroniques des coordonnées de position du système de génération à mesure que ledit système de génération est déplacé pour définir le contour de la zone spatiale ;

    b. une fois le contour de la zone spatiale défini, envoi par les moyens de gestion électroniques d'une commande mettant fin à l'acquisition de coordonnées spatiales relatives à la position du système.

- L'envoi de la commande de fin d'acquisition au cours de la sous-étape b est déclenché par le relâchement de l'organe de déclenchement.

- L'espace dans lequel est défini la zone spatiale fixe est modélisé par les moyens de gestion électroniques du système sous la forme d'un maillage.

- Le rapport entre la distance séparant les noeuds de maillage et la précision conférée par les moyens de localisation du système de génération est enregistré dans l'espace mémoire des moyens de gestion électroniques, ce rapport étant compris entre 1 et 3, et étant préférentiellement de l'ordre de 2.

- A l'intérieur de la zone spatiale, le rapport est diminué d'un facteur enregistré dans la zone mémoire des moyens de gestion électroniques, préférentiellement d'un facteur de l'ordre de $\sqrt{2}$ .

- La zone spatiale détectée étant une zone spatiale mobile, notamment un véhicule en mouvement, la sous-étape a de l'étape iii comprend la détermination périodique, par les moyens de gestion électroniques du système, des coordonnées spatiales de la zone mobile pour permettre aux moyens de gestion électronique de déterminer périodiquement la distance entre le système de génération et la zone mobile 2 dont les coordonnées ont été déterminées.

- Les moyens de gestion électroniques déterminent les trajectoires possibles du système de génération et/ou de la zone mobile à partir de leurs coordonnées spatiales respectives, puis déterminent une probabilité de collision entre le système de génération et la zone spatiale.

- La nature et/ou l'intensité du signal d'alerte généré par le dispositif d'alerte dépend de la probabilité de collision déterminée par les moyens de gestion électroniques et enregistrée dans l'espace mémoire du système de génération.

- La détermination de la probabilité de collision est réalisée selon les sous-étapes successives :

    a. détermination par les moyens de gestion électroniques du système de génération du nombre de trajectoires pouvant être empruntées par le système de génération et de détection ;

    b. détermination par les moyens de gestion électroniques du nombre de trajectoires conduisant à une collision certaine du système avec au moins une zone spatiale mobile ;

    c. détermination par les moyens de gestion électroniques du nombre de noeuds de division N séparant le système de génération et de détection de la trajectoire la plus proche du système et conduisant à une collision certaine, chaque noeud de division représentant T trajectoires possibles pouvant être empruntées à partir d'une trajectoire amont relativement au sens de déplacement du système ;

    d. calcul par les moyens de gestion électroniques de la probabilité de collision selon la formule $1/T^{N}$.

- Le signal d'alerte généré par le dispositif d'alerte dépend d'un indice de pondération associé à la zone spatiale détectée par le système, cet indice de pondération dépendant du nombre de systèmes ayant généré ladite zone spatiale.

L'invention vise également à proposer un procédé de détection d'au moins une zone spatiale de danger à éviter, préalablement générée à l'aide d'au moins un système de génération qui forme également un système de détection d'une telle zone, ledit système comprenant au moins des moyens de localisation et des moyens de gestion électroniques, lequel procédé de détection comprend au moins les étapes successives de :

    i. détermination périodique des coordonnées de position du système de détection par les moyens de localisation et de la distance entre ladite position du système et la zone spatiale fixe générée par les moyens de gestion électroniques ;

ii. lorsque la distance déterminée périodiquement à la sous-étape précédente est inférieure à une distance prédéterminée enregistrée dans l'espace mémoire des moyens de gestion, émission d'un signal d'alerte par un dispositif d'alerte du système de détection.

Le procédé de détection de l'invention peut également comporter les caractéristiques optionnelles suivantes considérées isolément ou selon toutes les combinaisons techniques possibles :

- La zone spatiale est générée par le système de génération mettant en oeuvre le procédé de génération tel que décrit précédemment.

- Le procédé comprend une étape supplémentaire de détection de zone spatiale mobile, au cours de laquelle les coordonnées spatiales de la zone mobile sont déterminée périodiquement par les moyens de gestion électroniques du système, lesquels moyens de gestion déterminent périodiquement la distance entre la position du système et la zone spatiale mobile dont les coordonnées ont été déterminées.

- La détermination périodique des coordonnées de la zone mobile est réalisée suivant les sous-étapes successives de :

    a. réception périodique des coordonnés spatiales de la zone mobile par des moyens de communication compris dans le système ;

    b. enregistrement périodique des coordonnées spatiales de la zone mobile dans l'espace mémoire du système.

- Les moyens de gestion électroniques déterminent la trajectoire du système et/ou de la zone mobile à partir de leurs coordonnées spatiales respectives, puis déterminent une probabilité de collision entre le système et la zone spatiale.

- Le signal d'alerte généré par le dispositif d'alerte dépend de la probabilité de collision déterminée par les moyens de gestion électroniques et enregistrée dans l'espace mémoire du système.

- La détermination de la probabilité de collision est réalisée selon les sous-étapes successives :

    a. détermination par les moyens de gestion électroniques du système de génération du nombre de trajectoires pouvant être empruntées par le système de génération et de détection ;

    b. détermination par les moyens de gestion électroniques du nombre de trajectoires conduisant à une collision certaine du système avec au moins une zone spatiale mobile ou fixe ;

c. détermination par les moyens de gestion électroniques du nombre de noeuds de division séparant le système de génération et de détection de la trajectoire la plus proche du système et conduisant à une collision certaine, chaque noeud de division représentant T trajectoires possibles pouvant être empruntées à partir d'une trajectoire amont relativement au sens de déplacement du système ;

d. calcul par les moyens de gestion électroniques de la probabilité de collision selon la formule $1/T^N$.

- Chaque noeud de division représente deux trajectoires avals possibles pouvant être empruntées à partir de la trajectoire amont, et en ce que la probabilité de collision est calculé selon la formule $1/2^N$.

- Le signal d'alerte généré par le dispositif d'alerte dépend d'un indice de pondération associé à la zone spatiale détectée par le système, cet indice de pondération dépendant du nombre de systèmes ayant généré ladite zone spatiale.

L'invention vise également un système de génération et de détection d'au moins une zone spatiale fixe ou mobile de danger à éviter, adapté pour mettre en oeuvre le procédé de génération et le procédé de détection tels que décrits précédemment, caractérisé essentiellement en ce qu'il comprend :

• des moyens de gestion électroniques comprenant un espace mémoire,

• un organe de déclenchement du procédé de génération tel que décrit précédemment,

• des moyens de localisation pour déterminer en temps réel les coordonnées du système,

• des moyens de communication au moins adaptés pour recevoir en temps réel les coordonnées spatiales d'une zone spatiale mobile,

• un dispositif d'alerte destiné à générer un signal d'alerte lorsque la distance entre le système et la zone spatiale mobile ou fixe est inférieure à une valeur déterminée enregistrée dans l'espace mémoire et/ou lorsque la probabilité de collision entre le système et la zone spatiale mobile ou fixe est non nulle,

• des moyens d'alimentation en énergie.

Le système de génération et de détection peut également comporter les caractéristiques optionnelles suivantes considérées isolément ou selon toutes les combinaisons techniques possibles :

- le système de génération et détection est réalisé sous la forme d'un gilet de sécurité.

L'invention vise également un ensemble de deux systèmes de génération et de détection d'au moins une zone spatiale tels que décrits précédemment, l'un des systèmes ayant généré une zone spatiale fixe par la mise en oeuvre du procédé de génération tel que décrit précédemment, est adapté pour transmettre via ses moyens de communication les coordonnées de la zone spatiale fixe générée aux moyens de communication de l'autre système de l'ensemble.

L'invention vise également un programme d'ordinateur comprenant des instructions qui, lorsque le programme est exécuté par ordinateur, conduisent celui-ci à mettre en oeuvre les étapes du procédé de génération tel que décrit précédemment et les étapes du procédé de détection tel que décrit précédemment.

L'invention vise également un moyen de stockage lisible par ordinateur, sur lequel est enregistré le programme d'ordinateur tel que décrit précédemment.

D'autres caractéristiques et avantages de l'invention ressortiront clairement de la description qui en est donnée ci-dessous, à titre indicatif et nullement limitatif, en référence aux figures annexées parmi lesquelles :

- la figure 1 est un diagramme illustrant les étapes principales du procédé de génération d'au moins une zone spatiale de l'invention ;

- la figure 2 est un diagramme illustrant les étapes principales du procédé de détection d'au moins une zone spatiale de l'invention ;

- la figure 3 illustre un piéton porteur du système de génération en bordure d'un endroit jugé dangereux et pour lequel une zone dangereuse a été automatiquement générée par ledit système ;

- les figures 4 à 6 illustrent un espace en deux dimensions sous la forme d'un maillage, et dans lequel sont respectivement représentées différentes trajectoires probables d'un piéton vers une zone spatiale détectée et/ou générée par un système de génération et de détection selon l'invention.

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement un mode de réalisation de l'objet de l'invention mais qu'il peut exister d'autres modes de réalisation qui répondent à la définition de l'invention.

La présente invention concerne un procédé permettant de générer des zones spatiales au sein d'un espace délimité 3 dans lequel des piétons 1 et des véhicules motorisés 2 sont susceptibles d'évoluer. Cet espace 3 est, par exemple et de manière non limitative, un chantier ou un secteur en travaux, et dans lequel des endroits ou éléments considérés comme dangereux 14 doivent être évités notamment par les piétons 1 pour éviter tout accident. De tels éléments sont par exemple des véhicules mobiles 2 ou des engins de levage, et de tels endroits sont par exemple des trous ou tranchées 14 réalisés dans le sol, ou encore un emplacement fixe où il existe un risque électrique.

Ainsi, le procédé de génération de l'invention permet de générer des zones spatiales 13 dont les coordonnées, par exemple des coordonnées géocentriques dans le référentiel de l'espace délimité 3, correspondent aux coordonnées des endroits ou des éléments à éviter. Ainsi, dans la suite de la description, les zones spatiales 13 à éviter et générées lors du procédé de génération de l'invention seront nommées zones dangereuses 13.

D'autre part, le procédé de détection de l'invention permet, lors de sa mise en oeuvre, de détecter au moins une zone dangereuse 13 à éviter et préalablement générée par exemple lors de la mise en oeuvre du procédé de génération de telles zones, ou par tout autre procédé susceptible de générer uen zone dangereuse 13. Ce procédé de détection est en outre à même de détecter n'importe quelle zone dangereuse 2 qui n'a pas été préalablement générée, notamment une zone dangereuse mobile 2, sous des conditions qui seront abordés plus tard dans la description.

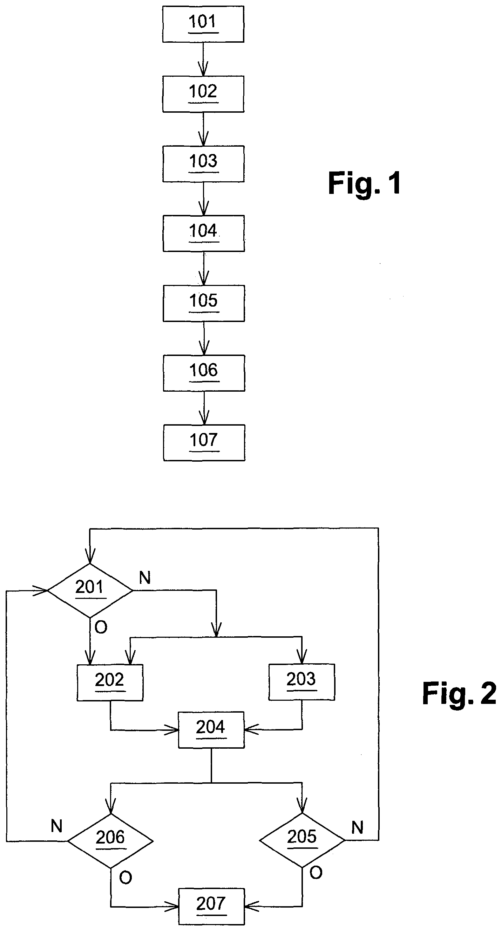

L'espace délimité 3 et les zones dangereuses 2, 13 peuvent être tridimensionnelles et définies selon des coordonnées géocentriques dans un référentiel en trois dimensions. A titre d'exemple, une telle zone dangereuse 2, 13 peut être le cône de danger générée par le mouvement d'un engin de levage, telle une grue. Bien entendu, ce procédé s'adapte parfaitement à un espace délimité 3 et à des zones dangereuses bidimensionnelles. Dans la suite de la description, et en référence aux figures 1 à 6, les deux procédés de l'invention seront décrits pour un espace délimité 3 et des zones dangereuses bidimensionnelles 2, 13. L'espace délimité bidimensionnel sera nommé, dans la suite de la description, surface de travail 3.

Le procédé de génération d'au moins une zone dangereuse 13 à éviter, ainsi que le procédé de détection d'une telle zone 13 est mis en oeuvre par un système de génération de cette zone 13, dont les caractéristiques vont maintenant être décrites.

Ce système est préférentiellement portable, pour par exemple être facilement mis à bord d'un véhicule. Mais surtout, ce système de génération est destiné à être porté par un piéton 1 évoluant dans la surface de travail 3, dans le but de le protéger de ces zones dangereuses 2, 13 inhérentes à tout chantier.

Dans un mode de réalisation préférentiel, le système de génération est un gilet susceptible d'être porté par le piéton 1 (notamment un ouvrier évoluant dans la surface de travail 3), et dans lequel sont intégrés divers dispositifs permettant la mise en oeuvre des procédés de génération et de détection de l'invention et qui vont être exposés ci-dessous.

Le système de génération comprend des moyens de gestion électroniques, comportant typiquement une carte électronique munie d'au moins un processeur et d'au moins un espace mémoire, par exemple et de manière non limitative une mémoire de masse réinscriptible à semi-conducteurs. Ces moyens de gestion électroniques assurent le contrôle et la coordination des autres dispositifs intégrés au système de génération. Les moyens de gestion électroniques permettent notamment de piloter la mise en oeuvre du procédé de génération d'au moins une zone dangereuse 13.

Le système de génération comprend des moyens de localisation, pour permettre de déterminer les coordonnées de position du système à tout moment. Par exemple, ces moyens de localisation sont un dispositif de triangulation de type GPS (de l'anglais « global positioning system ») ou préférentiellement un dispositif de positionnement Ultra Large Bande, connu également sous la dénomination dispositif de localisation UWB (de l'anglais « Ultra WideBand), qui présente l'avantage de procurer une excellente précision de localisation, typiquement de l'ordre de trente centimètres. Ces deux dispositifs permettent de déterminer les coordonnées géocentriques du système de génération à tout moment.

Le système de génération comprend de plus un organe de déclenchement relié à la carte électronique, qui est par exemple du type bouton poussoir. Ce bouton permet au porteur du système de génération de lancer la mise en oeuvre du procédé de génération d'au moins une zone dangereuse 13, comme cela sera décrit ultérieurement.

Le système de génération comprend également des moyens de communication reliés à la carte électronique, par exemple un dispositif émetteur-récepteur sans fil fonctionnant dans un réseau de télécommunication, et permettant au système de génération de communiquer et d'échanger des données avec un serveur distant. Les fonctions de ces moyens de communication seront décrites plus loin en lien avec la description du procédé de génération de zone dangereuse 13.

Enfin, le système de génération comprend des moyens d'alimentation en énergie des autres dispositifs dudit système de génération, ces moyens d'alimentation étant par exemple une batterie rechargeable.

En référence à la figure 1, le procédé de génération d'au moins une zone dangereuse 13 mis en oeuvre par le système de génération va maintenant être décrit. A cet effet, un programme enregistré dans l'espace mémoire de la carte électronique du système de génération comprend des instructions qui, lorsque le programme est exécuté par la carte électronique, conduisent ledit programme à mettre en oeuvre les étapes du procédé de génération.

Au cours de la première étape 101 du procédé de génération, qui intervient lorsque le porteur 1 du système de génération est positionné à la bordure d'un endroit qu'il juge dangereux 14, le porteur 1 actionne l'organe de déclenchement, en appuyant sur le bouton poussoir. L'appui 101 sur ce bouton a pour conséquence directe l'envoi, par la carte électronique, d'une commande aux moyens de localisation déclenchant l'acquisition des coordonnées géocentriques du système de génération. Ces coordonnées sont alors enregistrées 102 dans l'espace mémoire de ladite carte électronique.

La deuxième étape 103 du procédé consiste en la détermination d'un contour délimitant la zone dangereuse 13, à partir des coordonnées géocentriques du système de génération déterminées à la première étape. Cette deuxième étape 103 peut être réalisée suivant deux variantes, selon que le porteur 1 relâche le bouton poussoir suite à un déplacement du système de génération ou non.

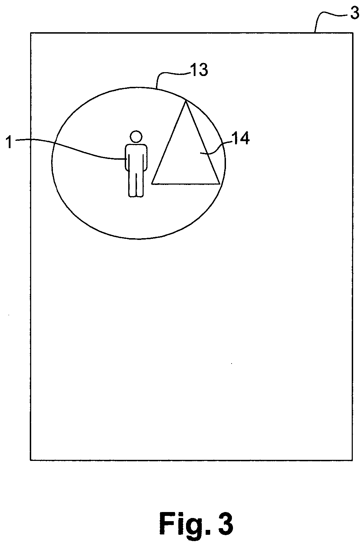

Dans la première variante en référence à la figure 3, le porteur 1 reste immobile et relâche le bouton poussoir. Dans ce cas, la carte électronique du système de génération attribue automatiquement les dimensions et la position de la zone dangereuse 13, par rapport à la position déterminée dudit système de génération, selon des grandeurs enregistrées dans l'espace mémoire de la carte électronique. A titre d'exemple, la carte électronique générera une zone dangereuse 13 de forme circulaire de diamètre déterminé et centrée sur la position déterminée du système de génération.

Dans la seconde variante, le porteur maintient dans un premier temps l'appui sur le bouton poussoir, et se déplace 103 tout autour de la bordure de l'endroit jugé dangereux 14. A mesure que le porteur 1 se déplace, la carte électronique détermine périodiquement et enregistre 104 dans son espace mémoire les coordonnées de position du système en déplacement, à partir des informations provenant des moyens de localisation.

Dans un second temps, une fois que le porteur a défini le contour de l'endroit jugé dangereux 14, ce dernier relâche 105 le bouton poussoir. La carte électronique envoie alors une commande 106 mettant fin à l'acquisition périodique des coordonnées du système de génération.

Ainsi, les coordonnées géocentriques définissant le contour de l'endroit jugé dangereux 14, obtenues selon la première ou la seconde variante décrites ci-dessus, puis enregistrées 104 dans l'espace mémoire de la carte électronique du système de génération porté par le piéton 1, sont attribuées à cette zone dangereuse 13 par la carte électronique. Il est entendu que les zones dangereuses 13 ainsi générées sont des zones fixes.

De manière optionnelle, mais préférentielle, et au cours de la troisième étape 107 du procédé de génération, la carte électronique du système de génération envoie 107, par l'intermédiaire de l'émetteur-récepteur du système de génération, les coordonnées géocentriques définissant la zone dangereuse 13 générée vers le serveur distant. Ces coordonnées de la zone dangereuse 13 sont alors enregistrées dans un espace mémoire du serveur, par exemple un disque dur ou tout autre moyen de stockage informatique connu.

Cette troisième étape 107 est d'une importance particulière lorsque plusieurs piétons 1, chacun muni d'un système de génération selon l'invention, se déplacent dans la surface de travail 3. En effet, chaque système de génération peut communiquer via son émetteur-récepteur avec le serveur, et ainsi y envoyer ou y récupérer des données. En particulier, dès qu'une zone dangereuse 13 est générée par l'un des systèmes de génération présente dans la surface de travail 3 et ses coordonnées enregistrées dans l'espace dédié du serveur, tous les autres systèmes de génération récupère les coordonnées de cette zone dangereuse 13 par l'intermédiaire de leur émetteur-récepteur.

De manière préférentielle, le système de génération d'une zone dangereuse 13 permet également de détecter n'importe quelle zone dangereuse générée 13 par ledit système de génération ou un quelconque autre système de génération présent dans la surface de travail 3. Cette fonction de détection d'une zone dangereuse 13 est bien entendue prévue pour protéger le piéton 1 porteur du système de génération et se déplaçant à l'intérieur de la surface de travail 3. Le système de génération formant ainsi également un système de détection, le système de génération sera nommé dans la suite de la description système de génération et de détection.

Pour optimiser cette protection, le système de génération et de détection comprend également un dispositif d'alerte, par exemple une alarme sonore et/ou visuelle, relié à la carte électronique et adapté notamment pour émettre une alerte lorsqu'une zone dangereuse 13 est détectée par le système de génération et détection.

En référence à la figure 2, un procédé de détection d'une zone dangereuse 2, 13 par le système de génération et détection va maintenant être décrit. Il est entendu que le porteur 1 du système et/ou la zone dangereuse 2 est/sont mobile/mobiles et sont donc susceptibles de se rencontrer. Le procédé de détection vise à éviter cet écueil.

Au cours de la première étape 201 du procédé de détection, la carte électronique détermine si la zone dangereuse est fixe 13 ou mobile 2.

Au cours de la deuxième étape 202 du procédé de détection, les moyens de localisation pilotés par la carte électronique déterminent périodiquement la position du système de génération et de détection.

Dans une première variante de cette deuxième étape 202, lorsque la zone dangereuse 13 est fixe (c'est-à-dire que la zone a été préalablement générée par un système de génération et détection), la carte électronique détermine périodiquement, au cours d'une troisième étape 204, la distance entre la position du système de génération et détection déterminée à la deuxième étape et ladite zone dangereuse 13.

Dans une deuxième variante, lorsque la zone dangereuse 2 est mobile (c'est-à-dire que la zone est représentée par un véhicule 2 en mouvement), le système de génération et détection doit également déterminer périodiquement 203, au cours de la deuxième étape, les coordonnées géocentriques de la zone mobile 2. Pour ce faire, le système de génération et détection peut comprendre des moyens de détection supplémentaire, par exemple un dispositif de type radar. Alternativement et de manière préférentielle, le véhicule 2 comprend un moyen de localisation et un émetteur-récepteur adapté pour transmettre périodiquement sa position. Cette donnée de position du véhicule 2 peut alors être interceptée par n'importe quel système de génération et de détection situé dans la surface de travail 3 par l'intermédiaire de son émetteur-récepteur, puis enregistrée périodiquement dans l'espace mémoire de la carte électronique du système de génération et détection considéré.

Dans une troisième étape 205, lorsque la distance entre la zone dangereuse 2, 13 et ledit système de génération et détection devient inférieure à une valeur déterminée enregistrée dans l'espace mémoire de la carte électronique 205, alors le dispositif d'alerte émet un signal 207 perceptible par le porteur 1. Ce dernier est ainsi prévenu qu'il se rapproche d'une zone dangereuse 2, 13, et que son attention doit être particulièrement portée sur ce risque de collision.

En revanche, tant que la distance entre la zone dangereuse 2, 13 et ledit système de génération et détection reste supérieure à la valeur déterminée, alors le procédé de détection de l'invention reprend à la suite de la première étape 201.

De manière particulièrement avantageuse, le système de génération et détection de l'invention permet d'adapter la nature et/ou l'intensité du signal d'alerte en fonction du niveau de dangerosité de la zone dangereuse 2, 13 détectée à éviter. Par exemple, le niveau de dangerosité peut faire référence à la probabilité de collision entre le piéton 1 portant le système de génération et détection et la zone dangereuse 2, 13, ou encore peut dépendre d'un indice de pondération attribué à la zone dangereuse 2, 13. Ces deux cas particuliers vont être décrits ci-après.

Le procédé de détection de l'invention comprend donc des étapes supplémentaires permettant d'évaluer le niveau de dangerosité de la zone dangereuse détectée 2, 13, et le cas échéant préalablement générée 13, afin de permettre à la carte électronique du système de génération et détection considéré d'adapter le signal d'alerte.

Dans le premier cas particulier, un indice de pondération de la zone dangereuse 13 générée par l'un des systèmes de génération et détection est attribué à cette dernière par la carte électronique du système considéré, et enregistré dans l'espace mémoire de ladite carte électronique. Ainsi, à chaque fois que les coordonnées d'une zone dangereuse 13 générée sont envoyées aux autres systèmes de génération et de détection, l'indice de pondération attribué à la zone dangereuse correspondante 13 est également envoyé.

Si un autre système de génération et détection génère ultérieurement une zone dangereuse 13 dont le contour se recoupe au moins en partie avec une zone dangereuse existante 13, alors l'indice de pondération associée à cette zone dangereuse 13 est itéré d'une valeur déterminée par la carte électronique des systèmes de génération présents dans la surface de travail 3. Par exemple, l'indice de pondération d'une zone dangereuse 13 générée une fois est de 1, l'indice de pondération d'une zone dangereuse générée deux fois par deux systèmes différents est de 2, et ainsi de suite. En d'autres termes, plus une zone dangereuse 13 est générée souvent par les systèmes de génération et détection présents dans la surface de travail, plus son indice de pondération est élevé, et plus la carte électronique du système de génération et détection détectant une telle zone 13 considère que le niveau de dangerosité de cette zone dangereuse 13 est élevé. Le signal d'alerte alors émis 207 par le système de génération et détection considéré en cas de détection d'une telle zone dangereuse 13 est d'autant plus critique que l'indice de pondération est élevé.

A titre d'exemple, si le signal d'alerte est un signal sonore, l'intensité sonore sera d'autant plus forte que l'indice de pondération est élevé. En cas de signal d'alerte visuel, un code couleur peut être établi, variant du vert au rouge en fonction de l'indice de pondération. Bien entendu, d'autres types de signaux d'alertes variables en fonction de l'indice de pondération peuvent être imaginés sans sortir du cadre de l'invention.

Ainsi, dans ce premier cas de prise en compte du niveau de dangerosité, le déclenchement de l'alerte 207 par la carte électronique est toujours dépendant de la distance séparant la zone dangereuse 13 du système de génération et détection considéré, mais la nature et/ou l'intensité du signal émis dépend de l'indice de pondération associé à la zone dangereuse détectée 13.

Dans le deuxième cas particulier, le niveau de dangerosité est directement relié à la probabilité de collision entre le porteur 1 en mouvement d'un système de génération et de détection et une zone dangereuse, mobile 2 ou fixe 13.

Pour déterminer cette probabilité, la carte électronique du système de génération et détection considéré utilise les coordonnées géocentriques dudit système et de la ou des zones dangereuses 2, 13 déjà périodiquement déterminées, pour déterminer au moins une trajectoire possible 9, 60 - 64 du système considéré et/ou de la zone mobile 2. Puis, pour chaque trajectoire possible du porteur 1 identifiée 60 - 64, la carte électronique du système de génération et détection considéré détermine si cette trajectoire 60 - 64 entre ou non en collision avec la zone mobile 2.

Cela permet donc à la carte électronique de calculer, à partir de toutes les trajectoires 9, 60 - 64 empruntables par le porteur 1 et/ou la zone mobile 2, la probabilité de collision entre le porteur et la zone dangereuse mobile 2. Si la probabilité calculée 206 est nulle, alors le procédé de détection de l'invention reprend à la suite de la première étape 201. Si la probabilité calculée 206 est supérieure à 0, la carte électronique commandera le dispositif d'alerte pour que ce dernier émette un signal d'alerte 207. En outre, en fonction de la valeur de cette probabilité, la carte électronique commandera le dispositif d'alerte pour que ce dernier émette un signal correspondant au risque de collision calculé. A titre d'exemple, si le signal d'alerte est un signal sonore, l'intensité sonore sera d'autant plus forte que la probabilité de collision est élevée. En cas de signal d'alerte visuel, un code couleur peut être établi, variant du vert au rouge en fonction de la probabilité de collision. Bien entendu, d'autres types de signaux d'alertes variables en fonction de l'indice de pondération peuvent être imaginés sans sortir du cadre de l'invention.

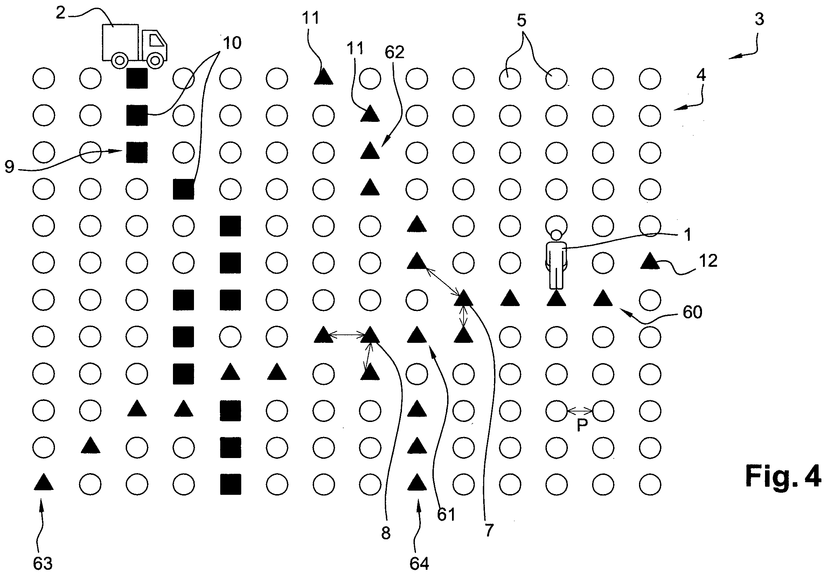

Le calcul de cette probabilité de collision et le niveau d'alerte résultant de cette probabilité va être maintenant illustré à travers les trois exemples représentés aux figures 4 à 6.

Les figures 4 à 6 représentent une surface de travail rectangulaire 3 pour laquelle un maillage 4 de pas déterminé P a été réalisé. Ce maillage 4, qui a pour but d'optimiser l'évaluation de dangerosité et de manière générale la détection d'une zone dangereuse 2, 13, sera décrit en détail plus loin. Les points représentés sur ces figures sont donc les noeuds 5 du maillage 4.

En outre, chacune des figures 4 à 6 représente la trajectoire 9 empruntée par un véhicule 2 (points de forme carrée 10), un tel véhicule 2 représentant une zone dangereuse mobile 2. De plus, les trajectoires possibles 60 - 64 d'un piéton 1 porteur d'un système de génération et de détection sont représentées par des triangles 11.

Le piéton 1 qui se déplace dans la surface de travail 3 peut emprunter trois trajectoires différentes 62, 63, 64. A partir de son point de départ 12 (situé à droite des figures 4 à 6), et en se déplaçant vers la zone dangereuse 2 (soit vers la gauche des figures 4 - 6), un chemin principal 60 emprunté par le piéton 1 se divise une première fois en une première 61 et une deuxième 62 branches au niveau d'un premier noeud de division 7. Puis la première 61 des deux branches se divise elle-même en une première 63 et une deuxième 64 sous-branches au niveau d'un deuxième noeud de division 8. Seule la première 63 des sous-branches rentre en collision avec la trajectoire 9 du véhicule 2 représentant la zone de danger mobile 2.

Toutes ces informations sont enregistrées dans l'espace mémoire de la carte électronique du système porté par le piéton 1, et cette carte électronique détermine la probabilité de collision en fonction du nombre de noeuds de division 7, 8 séparant le piéton 1 de la sous-branche 63 croisant la trajectoire 9 du véhicule 2, à savoir la première sous-branche 63.

Sur la figure 4, le piéton 1 est situé sur le chemin principal 60 entre son point de départ 12 et le premier noeud de division 7. La carte électronique du système de génération et détection porté par le piéton 1, en utilisant les données relatives aux trois trajectoires 62, 63, 64, aux noeuds de division 7, 8 et à l'existence d'une collision entre la première sous-branche 63 et la trajectoire 9 du véhicule 2, identifie donc la présence de deux noeuds de division 7, 8 entre le système de génération et de détection et la première sous-branche 63. Le piéton 1 a un risque sur deux d'emprunter la première branche 61, puis un risque sur deux d'emprunter ensuite la première sous-branche 63. La probabilité de collision du piéton 1 de la figure 3 calculée par la carte électronique est donc de 25%. La carte électronique commande l'émission d'un signal d'alerte peu critique, par exemple un signal lumineux simple.

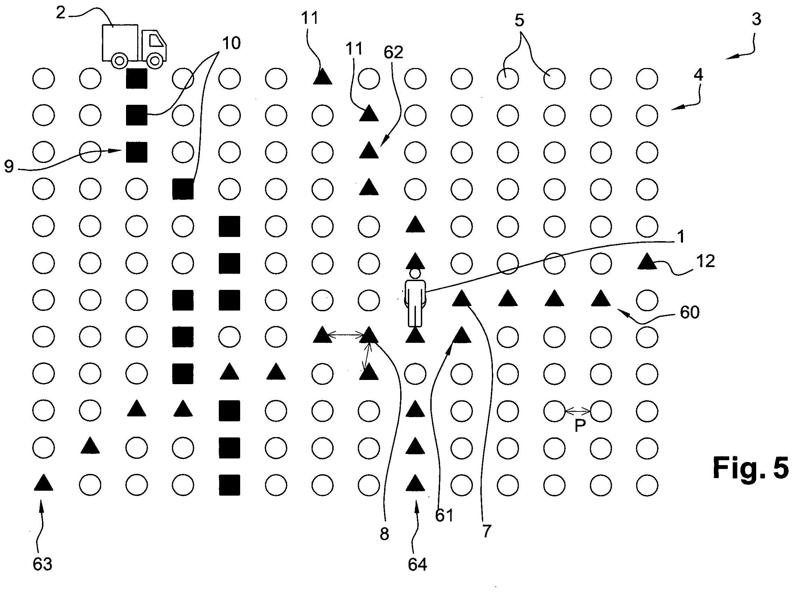

Sur la figure 5, le piéton 1 a déjà emprunté la première branche 61 et est donc situé entre le premier noeud de division 7 et le deuxième noeud de division 8. La carte électronique du système de génération et détection porté par le piéton identifie donc la présence d'un seul noeud de division 8 entre le système de génération et de détection et la première sous-branche 63. Le piéton 1 a un risque sur deux d'emprunter la première sous-branche 63. La probabilité de collision du piéton 1 de la figure 3 calculée par la carte électronique est donc de 50%. La carte électronique commande l'émission d'un signal d'alerte moyennement critique, par exemple un signal lumineux couplé à un signal sonore.

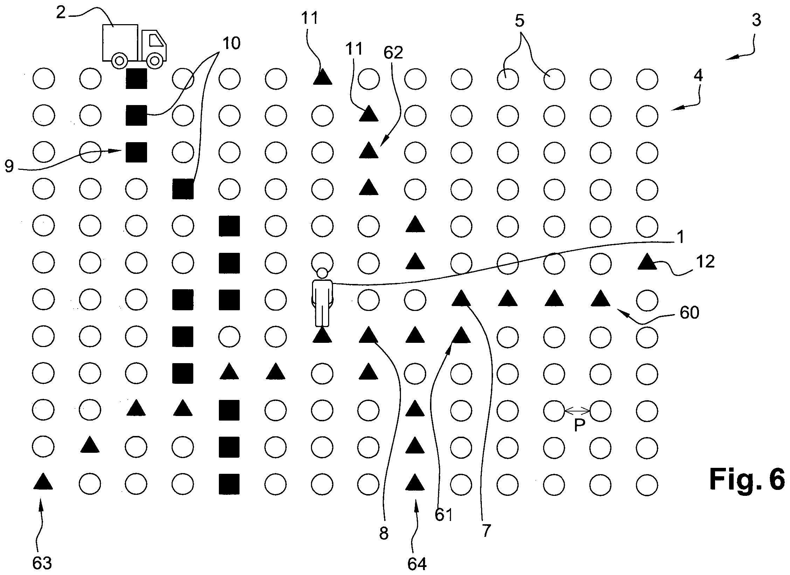

Sur la figure 6, le piéton 1 a emprunté la première sous-branche 63. S'il continue sa route, la probabilité de collision avec le véhicule 2 est donc de 100%, car le piéton 1 n'a plus aucune chance de changer de direction. La carte électronique commande l'émission d'un signal d'alerte critique, par exemple un signal lumineux couplé à un signal sonore et à un message précisant la nature du danger, affiché sur un moyen d'affichage du système de génération et détection relié à la carte électronique. Un tel signal doit provoquer l'arrêt du piéton 1.

Ces trois exemples sont bien entendu généralisables à autant de noeuds de division que possible, sachant qu'en aval de chaque noeud de division, un nombre T de directions possibles sont considérées pour le piéton (le terme aval étant compris par rapport au sens de déplacement du piéton 1). Pour déterminer une probabilité de collision, la carte électronique du système de détection porté par le piéton 1 détermine le nombre N de noeuds de division existant entre la position du système de détection et la trajectoire conduisant à une collision certaine avec une zone dangereuse 2, 13. La probabilité de collision déterminée par la carte électronique du système de détection considéré est alors de $1/T^N$. De manière simplifiée, en ne considérant que deux directions possibles en aval de chaque noeud de division, la probabilité de collision déterminée par la carte électronique du système de détection considéré sera alors de $1/2^N$.

Ainsi, dans le deuxième cas particulier de prise en compte du niveau de dangerosité, le déclenchement 207 de l'alerte par la carte électronique est indépendant de la distance séparant la zone dangereuse 2, 13 du système de génération et détection, et l'alerte peut être déclenchée dès qu'une probabilité de collision existe 206, même si le système de génération et détection est encore relativement éloigné de la zone dangereuse 2, 13. La nature et/ou l'intensité du signal émis dépend cette fois de la probabilité de collision.

Il doit être entendu que les deux cas particuliers décrits ci-dessus ne sont pas exclusifs, et peuvent être mis en oeuvre par un même système de génération et détection au cours du procédé de détection de l'invention, en même temps ou alternativement. Il est même encore plus avantageux de combiner ces deux cas particuliers pour assurer une sécurité optimale du porteur 1. Par exemple, une probabilité de collision détectée couplée à un fort indice de pondération de la zone dangereuse considérée 13 conduira à l'émission par le système de génération et détection considéré d'un signal d'alerte particulièrement critique, même si la probabilité de collision n'est pas particulièrement élevée.

En référence aux figures 4 à 6, et pour optimiser l'évaluation de dangerosité et de manière générale la détection d'une zone dangereuse 2, 13, les cartes électroniques des systèmes de génération et détection présents dans la surface de travail 3 comprennent chacun dans leur espace mémoire un maillage 4 de ladite surface de travail 3. Ce maillage 4 est réalisé préalablement, soit par la carte électronique directement, soit par un système informatique quelconque, auquel cas le maillage 4 est par la suite envoyé et enregistré dans l'espace mémoire de la carte électronique du système de génération et détection considéré.

Le maillage 4 comprend une pluralité de noeuds 5 régulièrement espacés, et le pas du maillage P (c'est-à-dire la distance séparant deux noeuds 5 adjacents) dépend directement de la précision conférée par les moyens de localisation du système de génération et détection. Préférentiellement, le rapport entre le pas du maillage P et la précision des moyens de localisation est compris entre 1 et 3, et est plus préférentiellement de l'ordre de 2. Ainsi, lorsque le système de localisation est un dispositif de localisation UWB dont la précision est de l'ordre de trente centimètres, le pas du maillage P est de l'ordre de soixante centimètres. Ce rapport est enregistré dans l'espace mémoire de la carte électronique du système de génération et détection considéré.

Avantageusement, dès qu'une zone dangereuse 13 est générée, chaque système de génération et détection présent dans la surface de travail 3 et ayant reçu les coordonnées de cette zone dangereuse 13 générée calcule un nouveau pas de maillage P de la portion de la surface de travail située à l'intérieur de ladite zone dangereuse 13 générée. Ce nouveau pas P est plus petit, ce qui augmente la définition du maillage 4 dans la zone dangereuse 13 générée et donc la précision de la détection à venir. Préférentiellement, le nouveau rapport entre le nouveau pas du maillage P à l'intérieur de la zone dangereuse 13 générée et la précision du système de localisation est de l'ordre de $\sqrt{2}$ . Bien entendu, ce nouveau pas de maillage P s'applique pour toutes les zones dangereuses 13 générées à l'intérieur de la surface de travail 3.

Le mode de réalisation décrit ci-dessus n'est nullement limitatif, et des modifications peuvent y être apportées sans sortir du cadre de l'invention. Par exemple, les étapes du procédé de détection décrites ci-dessus peuvent faire partie intégrante du procédé de génération de l'invention, et être mises en oeuvre après la deuxième ou la troisième étape dudit procédé de génération.

**Revendications**

1. Procédé de génération d'au moins une zone spatiale fixe (13) de danger à éviter dans un espace (3), à l'aide d'au moins un système de génération porté par un piéton et comprenant au moins des moyens de localisation et des moyens de gestion électroniques, lequel procédé de génération comprend successivement au moins :

    i. une étape d'envoi (102) par les moyens de gestion électroniques d'une commande déclenchant l'acquisition des coordonnés spatiales du système de génération aux moyens de localisation ;
    ii. une étape de détermination (103) par les moyens de gestion électroniques d'un contour de forme et de dimensions déterminées délimitant la zone spatiale fixe (13) à partir des coordonnés spatiales du système de génération acquises par les moyens de localisation, et enregistrement (104) des coordonnées spatiales définissant ledit contour dans un espace mémoire des moyens de gestion électroniques ;
    iii. une étape de détermination et d'enregistrement (105) consistant en la détection de la zone spatiale fixe (13) et/ou d'une zone spatiale mobile (2) par le système de génération apte à détecter une telle zone spatiale (2, 13), cette étape comprenant les sous-étapes successives de :

        a. détermination périodique des coordonnées de position du système par les moyens de localisation, des coordonnées spatiales de la zone mobile (2), et de la distance entre ladite position du système de génération et ladite zone spatiale mobile (2) et/ou la zone spatiale fixe (13) par les moyens de gestion électroniques ;
        b. lorsque la distance déterminée à la sous-étape précédente est inférieure à une distance prédéterminée enregistrée dans l'espace mémoire des moyens de gestion, émission d'un signal d'alerte par un dispositif d'alerte du système de génération ;

    iv. une étape de détermination par les moyens de gestion électroniques des trajectoires possibles (9, 60 - 64) du système de génération et/ou de la zone spatiale mobile (2) à partir de leurs coordonnées spatiales respectives, puis détermination d'une probabilité de collision entre le système de génération et la zone spatiale mobile (2) et/ou la zone spatiale fixe (13).

2. Procédé de génération selon la revendication précédente, **caractérisé en ce qu'**il comprend une étape supplémentaire (106) au cours de laquelle les coordonnées de la zone spatiale fixe (13) sont envoyées à au moins un autre système de génération, via des moyens de communication intégrés à chaque système.

3. Procédé de génération selon la revendication 1 ou 2, **caractérisé en ce que** l'étape i d'envoi (102) de la commande d'acquisition est réalisée manuellement par actionnement (101) d'un organe de déclenchement du type bouton poussoir solidaire du système de génération et relié électriquement aux moyens de gestion électroniques.

4. Procédé de génération selon l'une quelconque des revendications 1 à 3, **caractérisé en ce que** les dimensions de la zone spatiale fixe (13), et la position de la zone spatiale fixe (13) par rapport à la position du système de génération acquise à l'étape i, sont automatiquement attribuées à ladite zone spatiale fixe (13) par les moyens de gestion électroniques au cours de l'étape ii (103, 104), selon des grandeurs enregistrées dans l'espace mémoire desdits moyens de gestion électroniques.

5. Procédé de génération selon l'une quelconque des revendications 1 à 3, **caractérisé en ce que** l'étape ii (103, 104) de détermination d'un contour de la zone spatiale fixe (13) comprend les sous-étapes successives de :

    a. enregistrement périodique (104) dans l'espace mémoire des moyens de gestion électroniques des coordonnées de position du système de génération à mesure que ledit système de génération est déplacé pour définir le contour de la zone spatiale (103) ;

b. une fois le contour de la zone spatiale fixe (13) défini, envoi par les moyens de gestion électroniques d'une commande mettant fin à l'acquisition de coordonnées spatiales relatives à la position du système.

**6.** Procédé de génération selon la revendication 5, **caractérisé en ce que** l'envoi de la commande de fin d'acquisition au cours de la sous-étape b est déclenché par le relâchement (105) de l'organe de déclenchement.

**7.** Procédé de génération selon l'une quelconque des revendications précédentes, **caractérisé en ce que** l'espace (3) dans lequel est défini la zone spatiale fixe (13) est modélisé par les moyens de gestion électroniques du système sous la forme d'un maillage (4).

**8.** Procédé de génération selon l'une quelconque des revendications précédentes, **caractérisé en ce que** la détermination de la probabilité de collision est réalisée selon les sous-étapes successives :

a. détermination par les moyens de gestion électroniques du système de génération du nombre de trajectoires pouvant être empruntées par le système de génération et de détection ;

b. détermination par les moyens de gestion électroniques du nombre de trajectoires conduisant à une collision certaine du système avec au moins une zone spatiale mobile (2) ou fixe (13) ;

c. détermination par les moyens de gestion électroniques du nombre de noeuds de division N séparant le système de génération et de détection de la trajectoire la plus proche du système et conduisant à une collision certaine, chaque noeud de division représentant T trajectoires possibles pouvant être empruntées à partir d'une trajectoire amont relativement au sens de déplacement du système ;

d. calcul par les moyens de gestion électroniques de la probabilité de collision selon la formule $1/T^N$.

**9.** Procédé de détection d'au moins une zone spatiale (13) de danger à éviter, préalablement générée selon l'une quelconque des revendications 1 à 8 à l'aide d'au moins un système de génération qui forme également un système de détection d'une telle zone, ledit système comprenant au moins des moyens de localisation et des moyens de gestion électroniques, lequel procédé de détection comprend au moins les étapes successives de :

i. détermination périodique (202, 204) des coordonnées de position du système de détection par les moyens de localisation et de la distance entre ladite position du système et la zone spatiale fixe générée (13) par les moyens de gestion électroniques ;

ii. lorsque la distance déterminée périodiquement à la sous-étape précédente est inférieure (205) à une distance prédéterminée enregistrée dans l'espace mémoire des moyens de gestion, émission d'un signal d'alerte (207) par un dispositif d'alerte du système de détection.

**10.** Procédé de détection selon la revendication précédente, **caractérisé en ce que** les moyens de gestion électroniques déterminent la trajectoire du système et/ou de la zone mobile (2) à partir de leurs coordonnées spatiales respectives, puis déterminent une probabilité de collision entre le système et la zone spatiale mobile (2) ou la zone spatiale fixe (13).

**11.** Procédé de détection selon la revendication précédente, **caractérisé en ce que** la détermination de la probabilité de collision est réalisée selon les sous-étapes successives :

a. détermination par les moyens de gestion électroniques du système de génération du nombre de trajectoires (9, 60 - 64) pouvant être empruntées par le système de génération et de détection ;

b. détermination par les moyens de gestion électroniques du nombre de trajectoires (63) conduisant à une collision certaine du système avec au moins une zone spatiale mobile (2) ou fixe (13) ;

c. détermination par les moyens de gestion électroniques du nombre de noeuds de division (7, 8) séparant le système de génération et de détection de la trajectoire (63) la plus proche du système et conduisant à une collision certaine, chaque noeud de division (7, 8) représentant T trajectoires possibles pouvant être empruntées à partir d'une trajectoire amont relativement au sens de déplacement du système ;

d. calcul par les moyens de gestion électroniques de la probabilité de collision selon la formule $1/T^N$.

**12.** Système de génération et de détection d'au moins une zone spatiale fixe (13) ou mobile (2) de danger à éviter, adapté pour mettre en oeuvre le procédé de génération selon l'une quelconque des revendications 1 à 8 et le procédé de détection selon l'une quelconque des revendications 9 à 11, comprenant :

• des moyens de gestion électroniques comprenant un espace mémoire,
• un organe de déclenchement du procédé de génération selon l'une quelconque des revendications 1 à 8,
• des moyens de localisation pour déterminer en temps réel les coordonnées du système,
• des moyens de communication au moins adaptés pour recevoir en temps réel les coordonnées spatiales d'une zone spatiale mobile (2),
• un dispositif d'alerte destiné à générer un signal d'alerte lorsque la distance entre le système et la zone spatiale mobile ou fixe (2, 13) est inférieure à une valeur déterminée enregistrée dans l'espace mémoire et/ou lorsque la probabilité de collision entre le système et la zone spatiale mobile ou fixe (2, 13) est non nulle,
• des moyens d'alimentation en énergie.

13. Ensemble de deux systèmes de génération et de détection d'au moins une zone spatiale selon la revendication précédente, **caractérisé en ce que** l'un des systèmes ayant généré une zone spatiale fixe (13) par la mise en oeuvre du procédé de génération selon l'une quelconque des revendications 1 à 8, est adapté pour transmettre via ses moyens de communication les coordonnées de la zone spatiale fixe générée (13) aux moyens de communication de l'autre système de l'ensemble.

**Patentansprüche**

1. Verfahren zur Erzeugung wenigstens eines festen räumlichen Gefahrenbereichs (13), der in einem Raum (3) zu vermeiden ist, mithilfe wenigstens eines Erzeugungssystems, das von einem Fußgänger getragen wird und wenigstens Lokalisierungsmittel und elektronische Verwaltungsmittel umfasst, wobei das Erzeugungsverfahren aufeinanderfolgend wenigstens Folgendes umfasst:

i. einen Schritt des Sendens (102), durch die elektronischen Verwaltungsmittel, eines Befehls, der die Erfassung der räumlichen Koordinaten des Erzeugungssystems auslöst, an die Lokalisierungsmittel;
ii. einen Schritt des Bestimmens (103), durch die elektronischen Verwaltungsmittel, eines Formumrisses und bestimmter Abmessungen, die den festen räumlichen Bereich (13) begrenzen, anhand der räumlichen Koordinaten des Erzeugungssystems, die von den Lokalisierungsmitteln erfasst werden, und Speichern (104) der räumlichen Koordinaten, die den Umriss definieren, in einem Speicherraum der elektronischen Verwaltungsmittel;
iii. einen Schritt des Bestimmens und des Speicherns (105), der im Detektieren des festen räumlichen Bereichs (13) und/oder eines beweglichen räumlichen Bereichs (2) durch das Erzeugungssystem besteht, das geeignet ist, einen derartigen räumlichen Bereich (2, 13) zu detektieren, wobei dieser Schritt die folgenden aufeinanderfolgenden Unterschritte umfasst:

a. periodisches Bestimmen der Positionskoordinaten des Systems durch die Lokalisierungsmittel, der räumlichen Koordinaten des beweglichen Bereichs (2) und des Abstands zwischen der Position des Erzeugungssystems und dem beweglichen räumlichen Bereich (2) und/oder dem festen räumlichen Bereich (13) durch die elektronischen Verwaltungsmittel;
b. wenn der im vorhergehenden Unterschritt bestimmte Abstand kleiner als ein vorbestimmter Abstand ist, der im Speicherraum der Verwaltungsmittel gespeichert ist, Senden eines Warnsignals durch eine Warneinrichtung des Erzeugungssystems;

iv. einen Schritt des Bestimmens, durch die elektronischen Verwaltungsmittel, der möglichen Bewegungsbahnen (9, 60 - 64) des Erzeugungssystems und/oder des beweglichen räumlichen Bereichs (2) anhand ihrer jeweiligen räumlichen Koordinaten, dann Bestimmen einer Wahrscheinlichkeit einer Kollision zwischen dem Erzeugungssystem und dem beweglichen räumlichen Bereich (2) und/oder dem festen räumlichen Bereich (13).

2. Erzeugungsverfahren nach dem vorhergehenden Anspruch, **dadurch gekennzeichnet, dass** es einen zusätzlichen Schritt (106) umfasst, in dessen Verlauf die Koordinaten des festen räumlichen Bereichs (13) an wenigstens ein anderes Erzeugungssystem über Kommunikationsmittel gesendet werden, die in jedes System integriert sind.

3. Erzeugungsverfahren nach Anspruch 1 oder 2, **dadurch gekennzeichnet, dass** der Schritt i des Sendens (102) des Erfassungsbefehls manuell durch Betätigung (101) eines Auslöseelements vom Typ Druckknopf durchgeführt wird, das mit dem Erzeugungssystem fest verbunden und mit den elektronischen Verwaltungsmitteln elektrisch verbunden ist.

4. Erzeugungsverfahren nach einem der Ansprüche 1 bis 3, **dadurch gekennzeichnet, dass** die Abmessungen des festen räumlichen Bereichs (13) und die Position des festen räumlichen Bereichs (13) im Verhältnis zur Position des Erzeugungssystems, die bei Schritt i erfasst wird, durch die elektronischen Verwaltungsmittel im Verlauf des Schritts ii (103, 104) gemäß Größen, die im Speicherraum der elektronischen Verwaltungsmittel gespeichert sind, automatisch dem festen räumlichen Bereich (13) zugewiesen werden.

5. Erzeugungsverfahren nach einem der Ansprüche 1 bis 3, **dadurch gekennzeichnet, dass** der Schritt ii (103, 104) des Bestimmens eines Umrisses des festen räumlichen Bereichs (13) die folgenden aufeinanderfolgenden Unterschritte umfasst:

   a. periodisches Speichern (104) der Positionskoordinaten des Erzeugungssystems im Speicherraum der elektronischen Verwaltungsmittel, während das Erzeugungssystem bewegt wird, um den Umriss des räumlichen Bereichs (103) festzulegen;
   b. sobald der Umriss des festen räumlichen Bereichs (13) festgelegt ist, Senden, durch die elektronischen Verwaltungsmittel, eines Befehls, der die Erfassung von räumlichen Koordinaten in Bezug auf die Position des Systems beendet.

6. Erzeugungsverfahren nach Anspruch 5, **dadurch gekennzeichnet, dass** das Senden des Befehls zur Erfassungsbeendigung im Verlauf von Unterschritt b durch das Loslassen (105) des Auslöseelements ausgelöst wird.

7. Erzeugungsverfahren nach einem der vorhergehenden Ansprüche, **dadurch gekennzeichnet, dass** der Raum (3), in dem der feste räumliche Bereich (13) festgelegt ist, von den elektronischen Verwaltungsmitteln des Systems in Form eines Netzes (4) modelliert ist.

8. Erzeugungsverfahren nach einem der vorhergehenden Ansprüche, **dadurch gekennzeichnet, dass** das Bestimmen der Wahrscheinlichkeit einer Kollision gemäß den folgenden aufeinanderfolgenden Unterschritten durchgeführt wird:

   a. Bestimmen, durch die elektronischen Verwaltungsmittel des Erzeugungssystems, der Anzahl von Bewegungsbahnen, die vom Erzeugungs- und Detektionssystem eingeschlagen werden können;
   b. Bestimmen, durch die elektronischen Verwaltungsmittel, der Anzahl von Bewegungsbahnen, die zu einer sicheren Kollision des Systems mit wenigstens einem beweglichen (2) oder festen (13) räumlichen Bereich führen;
   c. Bestimmen, durch die elektronischen Verwaltungsmittel, der Anzahl von Teilungsknoten N, die das Erzeugungs- und Detektionssystem von der nächstgelegenen Bewegungsbahn des Systems trennen und zu einer sicheren Kollision führen, wobei jeder Teilungsknoten für T mögliche Bewegungsbahnen steht, die ausgehend von einer stromaufwärtigen Bewegungsbahn in Bezug auf die Bewegungsrichtung des Systems eingeschlagen werden können;
   d. Berechnen, durch die elektronischen Verwaltungsmittel, der Kollisionswahrscheinlichkeit gemäß der Formel $1/T^N$.

9. Verfahren zur Detektion wenigstens eines zu vermeidenden räumlichen Gefahrenbereichs (13), der zuvor nach einem der Ansprüche 1 bis 8 mithilfe wenigstens eines Erzeugungssystems erzeugt wurde, das ebenfalls ein System zur Detektion eines derartigen Bereichs bildet, wobei das System wenigstens Lokalisierungsmittel und elektronische Verwaltungsmittel umfasst, wobei das Detektionsverfahren wenigstens die folgenden aufeinanderfolgenden Schritte umfasst:

   i. periodisches Bestimmen (202, 204) der Positionskoordinaten des Detektionssystems durch die Lokalisierungsmittel und des Abstands zwischen der Position des Systems und dem erzeugten festen räumlichen Bereich (13) durch die elektronischen Verwaltungsmittel;
   ii. wenn der im vorhergehenden Unterschritt bestimmte Abstand kleiner (205) als ein vorbestimmter Abstand ist, der im Speicherraum der Verwaltungsmittel gespeichert ist, Senden eines Warnsignals (207) durch eine Warneinrichtung des Detektionssystems.

10. Detektionsverfahren nach dem vorhergehenden Anspruch, **dadurch gekennzeichnet, dass** die elektronischen Verwaltungsmittel die Bewegungsbahn des Systems und/oder des beweglichen Bereichs (2) anhand von deren jeweiligen räumlichen Koordinaten bestimmen, dann eine Wahrscheinlichkeit einer Kollision zwischen dem System und dem beweglichen räumlichen Bereich (2) oder dem festen räumlichen Bereich (13) bestimmen.

11. Detektionsverfahren nach dem vorhergehenden Anspruch, **dadurch gekennzeichnet, dass** das Bestimmen der Kollisionswahrscheinlichkeit gemäß den folgenden aufeinanderfolgenden Unterschritten durchgeführt wird:

   a. Bestimmen, durch die elektronischen Verwaltungsmittel des Erzeugungssystems, der Anzahl von Bewegungsbahnen (9, 60 - 64), die vom Erzeugungs- und Detektionssystem eingeschlagen werden können;
   b. Bestimmen, durch die elektronischen Verwaltungsmittel, der Anzahl von Bewegungsbahnen (63), die zu einer sicheren Kollision des Systems mit wenigstens einem beweglichen (2) oder festen (13) räumlichen Bereich führen;
   c. Bestimmen, durch die elektronischen Verwaltungsmittel, der Anzahl von Teilungsknoten (7, 8), die das Erzeugungs- und Detektionssystem von der nächstgelegenen Bewegungsbahn (63) des Systems trennen und zu einer sicheren Kollision führen, wobei jeder Teilungsknoten (7, 8) für T mögliche Bewegungsbahnen steht, die ausgehend von einer stromaufwärtigen Bewegungsbahn in Bezug auf die Bewegungsrichtung des Systems eingeschlagen werden können;

d. Berechnen, durch die elektronischen Verwaltungsmittel, der Kollisionswahrscheinlichkeit gemäß der Formel $1/T^N$.

12. System zur Erzeugung und Detektion wenigstens eines zu vermeidenden festen (13) oder beweglichen (2) räumlichen Gefahrenbereichs, das geeignet ist, das Erzeugungsverfahren nach einem der Ansprüche 1 bis 8 und das Detektionsverfahren nach einem der Ansprüche 9 bis 11 durchzuführen, umfassend:

   • elektronische Verwaltungsmittel, die einen Speicherraum umfassen,
   • ein Element zum Auslösen des Erzeugungsverfahrens nach einem der Ansprüche 1 bis 8,
   • Lokalisierungsmittel zur Bestimmung der Koordinaten des Systems in Echtzeit,
   • Kommunikationsmittel, die wenigstens dafür geeignet sind, in Echtzeit die räumlichen Koordinaten eines beweglichen räumlichen Bereichs (2) zu empfangen,
   • eine Warneinrichtung, die dazu bestimmt ist, ein Warnsignal zu erzeugen, wenn der Abstand zwischen dem System und dem beweglichen oder festen räumlichen Bereich (2, 13) kleiner als ein bestimmter Wert ist, der im Speicherraum gespeichert ist, und/oder wenn die Wahrscheinlichkeit einer Kollision zwischen dem System und dem beweglichen oder festen räumlichen Bereich (2, 13) nicht null beträgt,
   • Energieversorgungsmittel.

13. Anordnung zweier Systeme, zur Erzeugung und Detektion wenigstens eines räumlichen Bereichs nach dem vorhergehenden Anspruch, **dadurch gekennzeichnet, dass** eins der Systeme, das einen festen räumlichen Bereich (13) durch die Umsetzung des Erzeugungsverfahrens nach einem der Ansprüche 1 bis 8 erzeugt hat, dafür geeignet ist, über seine Kommunikationsmittel die Koordinaten des erzeugten festen räumlichen Bereichs (13) an die Kommunikationsmittel des anderen Systems der Anordnung zu übertragen.

**Claims**

1. Method for generating at least one fixed spatial danger zone (13) to be avoided in a space (3), using at least one generation system worn by a pedestrian and comprising at least locating means and electronic management means, which generation method successively comprises at least:

   i. a step of the electronic management means sending (102) a command triggering the acquisition of the spatial coordinates of the generation system to the locating means;
   ii. a step of the electronic management means determining (103) an outline of determined shape and dimensions delimiting the fixed spatial zone (13) on the basis of the spatial coordinates of the generation system acquired by the locating means, and recording (104) the spatial coordinates defining said outline in a memory space of the electronic management means;
   iii. a determination and recording step (105) consisting in detecting the fixed spatial zone (13) and/or a mobile spatial zone (2) by means of the generation system capable of detecting such a spatial zone (2, 13), this step comprising the successive sub-steps of:

      a. the locating means periodically determining the position coordinates of the system, and the electronic management means periodically determining the spatial coordinates of the mobile zone (2) and the distance between said position of the generation system and said mobile spatial zone (2) and/or the fixed spatial zone (13);
      b. when the distance determined in the preceding sub-step is smaller than a predetermined distance recorded in the memory space of the management means, a warning device of the generation system issuing a warning signal;

   iv. a step of the electronic management means determining the possible trajectories (9, 60-64) of the generation system and/or of the mobile spatial zone (2) on the basis of their respective spatial coordinates, then determining a probability of collision between the generation system and the mobile spatial zone (2) and/or the fixed spatial zone (13).

2. Generation method according to the preceding claim, wherein it comprises an additional step (106) during which the coordinates of the fixed spatial zone (13) are sent to at least one other generation system via communication means integrated into each system.

3. Generation method according to Claim 1 or 2, wherein the step i of sending (102) the acquisition command is carried out manually by actuating (101) a triggering member of push-button type that is integral with the generation system and electrically connected to the electronic management means.

4. Generation method according to any one of Claims 1 to 3, wherein the dimensions of the fixed spatial zone (13) and the position of the fixed spatial zone (13) with respect to the position of the generation system acquired in step i are automatically assigned to said fixed spatial zone (13) by the electronic management means during step ii (103, 104) according to quantities recorded in the memory space of said electronic management means.

5. Generation method according to any one of Claims 1 to 3, wherein step ii (103, 104) of determining an outline of the fixed spatial zone (13) comprises the successive sub-steps of:

   a. periodically recording (104), in the memory space of the electronic management means, the position coordinates of the generation system as said generation system is moved in order to define the outline of the spatial zone (103);
   b. once the outline of the fixed spatial zone (13) has been defined, the electronic management means sending a command terminating the acquisition of spatial coordinates in relation to the position of the system.

6. Generation method according to Claim 5, wherein the sending of the termination-of-acquisition command during sub-step b is triggered by the release (105) of the triggering member.

7. Generation method according to any one of the preceding claims, wherein the space (3) in which the fixed spatial zone (13) is defined is modelled by the electronic management means of the system in the form of a mesh (4).

8. Generation method according to any one of the preceding claims, wherein the probability of collision is determined according to the successive sub-steps:

   a. the electronic management means of the generation system determining the number of trajectories that may be taken by the generation and detection system;
   b. the electronic management means determining the number of trajectories leading to a certain collision of the system with at least one mobile spatial zone (2) or fixed spatial zone (13);
   c. the electronic management means determining the number of dividing nodes N separating the generation and detection system from the trajectory closest to the system and leading to a certain collision, each dividing node representing T possible trajectories that may be taken from a trajectory that is upstream relative to the direction of movement of the system;
   d. the electronic management means calculating the probability of collision according to the formula $1/T^N$.

9. Method for detecting at least one spatial danger zone (13) to be avoided, previously generated according to any one of Claims 1 to 8 using at least one generation system which also forms a system for detecting such a zone, said system comprising at least locating means and electronic management means, which detection method comprises at least the successive steps of:

   i. the locating means periodically determining (202, 204) the position coordinates of the detection system, and the electronic management means periodically determining the distance between said position of the system and the generated fixed spatial zone (13);
   ii. when the distance periodically determined in the preceding sub-step is smaller (205) than a predetermined distance recorded in the memory space of the management means, a warning device of the detection system issuing a warning signal (207).

10. Detection method according to the preceding claim, wherein the electronic management means determine the trajectory of the system and/or of the mobile zone (2) on the basis of their respective spatial coordinates, then determine a probability of collision between the system and the mobile spatial zone (2) or the fixed spatial zone (13).

11. Detection method according to the preceding claim, wherein the probability of collision is determined according to the successive sub-steps:

   a. the electronic management means of the generation system determining the number of trajectories (9, 60-64) that may be taken by the generation and detection system;
   b. the electronic management means determining the number of trajectories (63) leading to a certain collision of the system with at least one mobile spatial zone (2) or fixed spatial zone (13);
   c. the electronic management means determining the number of dividing nodes (7, 8) separating the generation and detection system from the trajectory (63) closest to the system and leading to a certain collision, each dividing node (7, 8) representing T possible trajectories that may be taken from a trajectory that is upstream relative to the direction of movement of the system;

d. the electronic management means calculating the probability of collision according to the formula $1/T^N$.

12. System for generating and detecting at least one fixed spatial danger zone (13) or mobile spatial danger zone (2) to be avoided, suitable for implementing the generation method according to any one of Claims 1 to 8 and the detection method according to any one of Claims 9 to 11, comprising:

• electronic management means comprising a memory space,
• a member for triggering the generation method according to any one of Claims 1 to 8,
• locating means for determining the coordinates of the system in real time,
• communication means at least suitable for receiving the spatial coordinates of a mobile spatial zone (2) in real time,
• a warning device intended to generate a warning signal when the distance between the system and the mobile or fixed spatial zone (2, 13) is smaller than a determined value recorded in the memory space and/or when the probability of collision between the system and the mobile or fixed spatial zone (2, 13) is non-zero,
• power supply means.

13. Set of two systems for generating and detecting at least one spatial zone according to the preceding claim, wherein one of the systems, having generated a fixed spatial zone (13) by implementing the generation method according to any one of Claims 1 to 8, is suitable for transmitting, via its communication means, the coordinates of the generated fixed spatial zone (13) to the communication means of the other system of the set.

Fig. 1

Fig. 2

**Fig. 3**

Fig. 4

EP 3 775 963 B1

Fig. 5

EP 3 775 963 B1

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 201501094 A
- WO 2015144684 A1